# NEUE EUROPÄISCHE PATENTSCHRIFT

(11) **EP 0 326 584 B2**
(45) Veröffentlichungstag und Bekanntmachung des Hinweises auf die Entscheidung über den Einspruch: **19.05.2004**
(45) Hinweis auf die Patenterteilung: 08.05.1991
(21) Anmeldenummer: 88900679.7
(22) Anmeldetag: 15.10.1987
(51) Int. Cl.: B29C 47/04, B29C 49/22

(54) **VERFAHREN UND VORRICHTUNG ZUR HERSTELLUNG GROSSVOLUMIGER HOHLKÖRPER AUS KUNSTSTOFF MIT MEHRSCHICHTIGEN WANDUNGEN**
PROCESS AND DEVICE FOR PRODUCING LARGE HOLLOW PLASTIC BODIES WITH MULTILAYERED WALLS
PROCEDE ET DISPOSITIF DE PRODUCTION DE CORPS CREUX ET VOLUMINEUX EN PLASTIQUE A PAROIS STRATIFIEES

(30) Priorität: 17.10.1986 DE 3635334
(43) Veröffentlichungstag der Anmeldung: 09.08.1989
(73) Patentinhaber: RICHTER, Günther, 57610 Altenkirchen (DE)
(72) Erfinder: RICHTER, Günther, 57610 Altenkirchen (DE)
(74) Vertreter: Schaumburg, Thoenes, Thurn Patentanwälte
(86) Internationale Anmeldenummer: PCT/EP1987/000606
(87) Internationale Veröffentlichungsnummer: WO 1988/002689

(56) Entgegenhaltungen:
- EP-A- 0 110 493
- EP-A- 0 110 493
- EP-A- 0 249 866
- DE-A- 1 704 861
- DE-A- 2 556 350
- DE-A- 2 712 910
- DE-A- 2 712 911
- DE-B- 1 113 804
- DE-C- 2 536 851
- FR-A- 2 299 957
- FR-A- 2 369 923
- US-A- 3 404 432
- US-A- 3 734 662
- US-A- 4 152 104
- US-A- 4 208 178
- US-A- 4 548 569

## Beschreibung

Die Erfindung bezieht sich auf ein Verfahren zur diskontinuierlichen Herstellung mehrschichtiger, coextrudierter, schlauchartiger Vorformlinge aus thermoplastischem Kunststoff zur Bildung großvolumiger, mehrschichtiger Hohlkörper in einer geteilten Blasform, bei dem mindestens zwei unterschiedliche, ringförmige Materialschmelzen zu einer mehrschichtigen Materialschmelze zusammengeführt werden und bei dem diese mehrschichtige Materialschmelze sich trichterförmig erweiternd in einen Ringspeicherraum fließt und anschließend durch einen in axialer Richtung bewegbaren Ringkolben, der als Coextrusionskopf wirkt und von der mehrschichtigen Materialschmelze nach oben gedrückt wird, über einen Ringdüsenspalt ausgestoßen wird, sowie auf eine Vorrichtung zur Durchführung dieses Verfahrens.

Aus der DE-OS 27 12 910 (Fig. 3) ist ein Verfahren zur diskontinuierlichen Herstellung mehrschichtiger, coextrudierter, schlauchartiger Vorformlinge aus thermoplastischem Kunststoff zur Bildung mehrschichtiger Hohlkörper in einer geteilten Blasform bekannt, bei dem die unterschiedlichen Materialschmelzen in besondere Führungsschlitze eines Ringkolbens eingeleitet und durch Umlenkungen von 180 Grad ringförmig ausgebildet werden. Diese ringförmigen Materialschmelzen stoßen dann in einem radial gerichteten, umlaufenden Kanal zusammen, von dem sie dann gemeinsam nach einer weiteren Umlenkung von 90 Grad in einen gemeinsamen, ringförmigen Fließkanal übergehen. Dieser Fließkanal mündet einseitig in einen dem Ringkolben vorgeordneten Ringspeicherraum, wobei der Ringkolben durch die einströmenden Materialschmelzen zurückgedrängt und der sich dadurch vergrößernde Ringspeicherraum gefüllt wird. Anschließend werden diese Materialschmelzen durch den Ringkolben über einen absperrbaren Düsenspalt ausgestoßen. Das annähernd stumpfe Aufeinandertreffen der beiden Materialschmelzen hat zwangsläufig zur Folge, daß sich die einzelnen Materialschmelzen in der mehrschichtigen Materialschmelze in nicht genau vorhersehbarer Wandstärke ausbilden. Die Umlenkung der mehrschichtigen Materialschmelze um 90 Grad hat zur Folge, daß die Wandstärkenausbildung der einzelnen Materialschmelzen im Verbund weiterhin nachteilig beeinträchtigt wird. Wenn die zweischichtige Materialschmelze dann einseitig in den Ringspeicherraum strömt, legen sowohl hier als auch beim Austritt aus dem Ringspeicherraum, die unterschiedlichen Materialschmelzen erheblich unterschiedliche Wege zurück, was ebenfalls zu einer Beeinträchtigung der Wandstärken der einzelnen Materialschmelzen führen kann. Diese gesamten Faktoren tragen dazu bei, daß eine Veränderung der Schichtdicken auftritt, die sich beim geblasenen Hohlkörper nachteilig, beispielsweise durch teilweise Zerstörung einer Schicht, bemerkbar macht. Diese Nachteile nehmen mit zunehmender Größe des herzustellenden Hohlkörpers zu. Für großvolumige Hohlkörper, die ein Volumen von mehr als 20 Liter, beispielsweise 1000 Liter, aufweisen, ist dieses bekannte Verfahren ungeeignet.

Auch der Speicherkopf gemäß EP-A-0 249 866 (Stand der Technik gemäß Art. 54(3) EPÜ) wird mit mindestens zwei unterschiedlichen Materialschmelzen beschickt, die in getrennte, koaxial zueinander angeordnete und ringförmigen Querschnitt aufweisende Speisekanäle eines ortsfesten Coextrusionskopfes eingeleitet werden. Alle Speisekanäle laufen an einem Punkt zusammen, von dem dann die mehrschichtige Materialschmelze in einen Ringkanal strömt. An seinem den Speisekanälen abgewandten Ende geht der Ringkanal in eine erste Kanalerweiterung über, deren größter Querschnitt dem Querschnitt eines Expansionsraumes im Ringkolben entspricht. Diese Kanalerweiterung ist verhältnismäßig kurz ausgebildet, so daß die mehrschichtige Materialschmelze auf einem verhältnismäßig kurzen Weg sehr stark expandieren mut. Bis zu diesem Expansionsraum stimmen die Verfahrensabläufe der Fign. 1 und 2 sowie der Fign. 3 und 4 der EP-A- 0 249 866 überein.

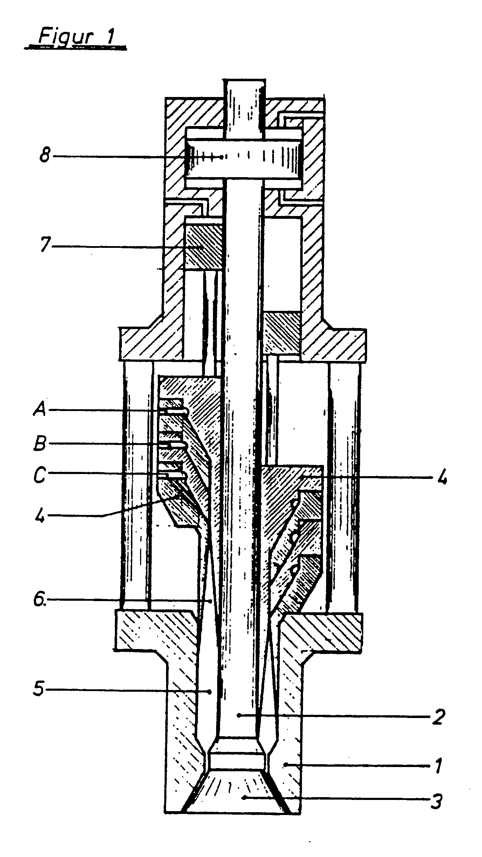

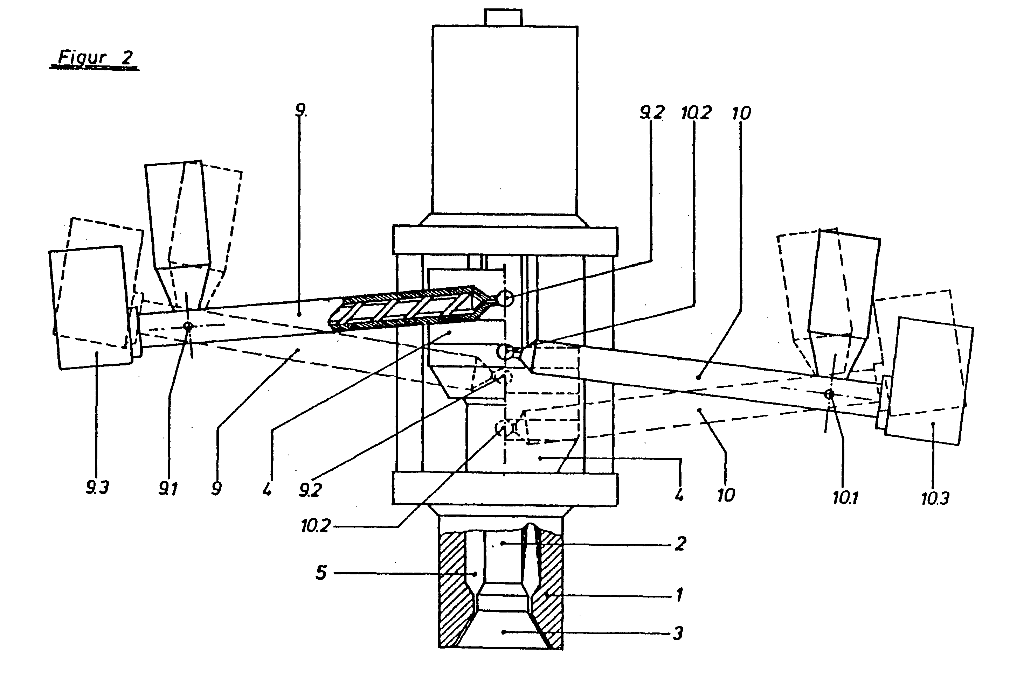

Bei dem Ausführungsbeispiel der Fign. 1 und 2 strömt nun die mehrschichtige Materialschmelze von dem Expansionsraum über eine durch Schrägen gebildete zweite Erweiterung in den Stauraum bzw. Ringspeicher. Dabei findet eine weitere Expansion bzw. Querschnittsveränderung der mehrschichtigen Materialschmelze statt. Ober Schrägen des Ringkolbens wird derselbe in seine Lage gemäß Fig. 2 zurückgedrängt. Sobald der Stauraum vollständig mit der mehrschichtigen Materialschmelze gefüllt ist, wird über den nach unten bewegbaren Ringkolben die Ausstotbewegung eingeleitet und über eine Ringdüse ein schlauchartiger, mehrschichtiger Vorformling erzeugt Insbesondere die zweite Querschnittsvergrößerung bzw. Expansion der mehrschichtigen Materialschmelze - die erste findet in der Kanalerweiterung und die zweite im Bereich der Schrägen des Ringkolbens statt - bringt die Gefahr mit sich, daß die mehrschichtige Materialschmelze in ihrer Struktur nicht erhalten bleibt Hier können sich die Dicken der einzelnen Schichten der Materialschmelze unterschiedlich verformen, so daß der schlauchartige Vorformling, insbesondere aber der geblasene, fertige Hohlkörper, die angestrebten Schichtstärken nicht mehr aufweist. Der größte Nachteil des Verfahrensablaufes der Fign. 1 und 2 besteht jedoch darin, daß beim Extrudieren des schlauchartigen Vorformlings, also bei der Bewegung des Ringkolbens aus der Stellung der Fig. 2 in die Stellung der Fig. 1, der Stauraum in Fließrichtung nicht vollständig entleert wird, sondern ein Teil der im Stauraum befindlichen, mehrschichtigen Materialschmelze wieder in den Expansionsraum zurückströmen muß. Dies führt zu einer weiteren Beeinträchtigung der Struktur der mehrschichtigen Materialschmelze, was sich jedoch erst beim nächsten Vorformling bemerkbar macht. Hier dürften die angestrebten Schichtstärken nicht mehr vorhanden bzw. zumindest die äußere Schicht zerstört sein.

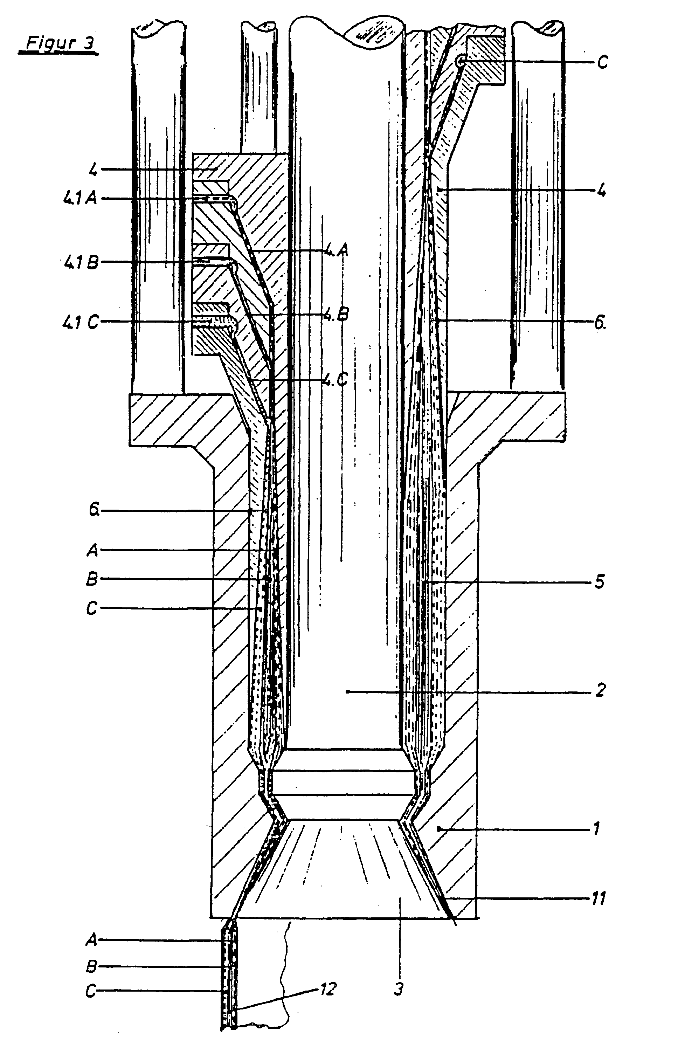

Auch beim Ausführungsbeispiel der Fign. 3 und 4 der EP-A-0 249 866 findet eine mehrmalige Querschnittsveränderung der mehrschichtigen Materialschmelze statt. Zunächst expandiert hier die mehrschichtige Materialschmelze, wenn sie vom Ringkanal in den Expansionsraum einströmt, der hier gleichzeitig den Ringspeicherraum bildet. Dabei wird der Ringkolben aus seiner Füllstellung gemäß Fig. 3 in seine Ausstoßstellung gemäß Fig. 4 verschoben. Vom Expansionsraum aus wird die mehrschichtige Materialschmelze dann wieder in ihrem Querschnitt verformt, wenn sie durch das Verjüngungsstück in den von Dichtüppenringen begrenzten Ringkanal strömt. Im Anschluß an diesen Ringkanal expandiert die mehrschichtige Materialschmelze erneut, wenn sie in den der Düsenleitung vorgeordneten, nicht gekennzeichneten, erweiterten Ringraum strömt. Dieser Ringraum ist durch die Dichtüppenringe vorgegeben und wird dann gebildet, wenn sich der Ringkolben aus der Stellung der Fig. 3 in die Stellung der Fig. 4 bewegt. Diese Bewegung findet entgegen der Fließrichtung der mehrschichügen Materialschmelze statt und kann ebenfalls zu einer Beeinträchtigung der Struktur der mehrschichtigen Materialschmelze, insbesondere der äußeren Schicht, fuhren. Der vorerwähnte Ringraum wird bei der entgegengesetzten Bewegung des Ringkolbens, also bei der Füllung des Expansionsraumes, wieder verkleinert. Dies bedeutet, daß der größte Teil der in diesem Ringraum befindlichen, mehrschichtigen Materialschmelze - die Düse ist geschlossen - in den Ringkanal zurückfließen muß, der von den beiden Dichtlippenringen begrenzt ist. Dieses Zurückfließen der mehrschichtigen Materialschmelze führt ebenfalls zu einer Beeinträchtigung der Struktur der einzelnen Schichten, wodurch zumindest die äußere Schicht des nachfolgenden Vorformlings und des geblasenen Hohlkörpers stark beeinträchtigt, wenn nicht sogar unterbrochen wird.

Der Erfindung liegt die Aufgabe zugrunde, ein Verfahren bzw. eine Vorrichtung zu schaffen, welches bzw. welche eine Durchmischung der Materialschichten ausschließt und eine unerwünschte Veränderung der Schichtdicke während des Einfließen in den Ringspeicherraum bzw. während des Ausstoßvorganges, insbesondere beim späteren Blasen des Hohlkörpers, ausschließt.

Zur Lösung dieser Aufgabe werden die im Patentanspruch 1 aufgeführten Verfahrensschritte vorgeschlagen. Der allmähliche, sich trichterförmig erweiternde Übergang der mehrschichtigen Materialschmelze vom Ringkanal zum Ringspeicherraum, der ausschließlich im Ringkolben stattfindet, stellt hier sicher, daß die einzelnen Schichten der Materialschmelze in ihrer Struktur nicht verändert werden, sondern erhalten bleiben.

Eine mehrmalige Querschnittsveränderung der mehrschichtigen Materialschmelze oder sogar ein Zurückfließen der mehrschichtigen Materialschmeize findet hier nicht statt.

Eine Vorrichtung zur Durchführung des erfindungsgemäßen Verfahren ist in den Ansprüchen 2-8 offenbart.

Die Erfindung wird nachfolgend anhand eines in einer Zeichnung dargestellten Ausführungsbeispieles näher erläutert. Dabei zeigen
Fig. 1 einen Schnitt durch einen Ringkolbenspeicher einer Vorrichtung gemäß der Erfindung,
Fig. 2 den Ringkolbenspeicher der Fig. 1 mit Extrudern und
Fig. 3 einen vergrößerten Ausschnitt des Ringkolbenspeichers der Fig. 1 mit den einzelnen Materialschichten.

In der Fig. 1 der Zeichnung ist ein Ringkolbenstaukopf dargestellt, der zur Herstellung mehrschichtiger, coextrudierter, schlauchartiger Vorformlinge aus thermoplastischem Kunststoff zur Bildung großvolumiger, mehrschichtiger Hohlkörper in einer geteilten Blasform dient. Bei diesem Ausführungsbeispiel wird die Wandung des schlauchartigen Vorformlings und damit auch die Wandung des späteren Hohlkörpers aus drei Schichten bzw. drei Materialschmelzen A, B, C gebildet. Der Ringkolbenstaukopf besteht aus einem Speichermantel 1, der mit einem nicht näher bezeichneten Gehäuse verbunden ist. Innerhalb des Speichermantels 1 ist eine Pinole 2 mit einem Düsenpilz 3 axial verschiebbar angeordnet, über die ein ringartiger, zwischen Speichermantel 1 und Pinole 2 gebildeter Düsenspalt 11 (Fig. 3) geöffnet und geschlossen werden kann. Zur axialen Verschiebung der Pinole 2 und damit des Düsenpilzes 3 trägt die Pinole 2 an ihrem dem Düsenpilz 3 abgewandten Ende einen Kolben 8, der im Gehäuse geführt ist und bedarfsweise jeweils auf einer von beiden Seiten mit Druckmittel beaufschlagbar ist.

Auf der Pinole 2 sowie im Speichermantel 1 ist ein Ringkolben 4 axial verschiebbar geführt, der ebenfalls über einen im Gehäuse befindlichen Kolben 7 in Richtung auf den Düsenpilz 3 verschoben werden kann. Dazu wird der Kolben 7 nur einseitig mit Druckmittel beaufschlagt.

Der Ringkolben 4 besteht im dargestellten Ausführungsbeispiel aus vier fest miteinander verbundenen, ringförmigen Kolbenteilen, die so ausgebildet und zusammengesetzt sind, daß jeweils zwischen den benachbarten, ringförmigen Kolbenteilen ein ringförmiger Fließkanal 4.A, 4.B, 4.C gebildet ist. Jeder ringförmige Fließkanal 4.A, 4.B, 4.C steht mit einer radial verlaufenden Fließkanalbohrung 4.1 A, 4.1 B, 4.1 C in Verbindung (Fig. 3), in deren Bereich jeweils ein Extruder 9, 10 angeschlossen ist. Die Extruder 9, 10 sind beispielsweise sternförmig um den Ringkolbenstaukopf angeordnet, so daß der dritte Extruder in der Zeichnung nicht zu sehen ist bzw. zur besseren Darstellung nicht eingezeichnet oder angedeutet wurde.

Die ringförmigen Fließkanäle 4.A, 4.B, 4.C gehen, in axialer Richtung gesehen, nacheinander in einen gemeinsamen Fließkanal 6 über, der mittig im Ringkolben 4 angeordnet ist. Dabei wird der Fließkanal 6 von ringförmigen Vorsprüngen begrenzt, die am vorderen und hinteren ringförmigen Teil des Ringkolbens 4 angeordnet sind. Der ringförmige Fließkanal 6 erweitert sich allmählich, ausschließlich innerhalb des Ringkolbens 4, trichterförmig bis annähernd auf die Breite des Ringspeicherraumes 5. Um sicherzustellen, daß die an dem Ringkolben 4 gelenkig angeschlossenen Extruder 9, 10 die Bewegung des Ringkolbens 4 mitmachen können, sind die Extruder 9, 10 in einem Gelenk gelagert, welches zusätzlich noch in axialer Richtung verschiebbar ist.

Bei der Arbeitsweise der vorbeschriebenen Vorrichtung nimmt der Ringkolben 4 eine Ausgangslage ein, in der sich derselbe möglichst nahe an der Düse 11 bzw. dem Düsenpilz 3 befindet, d.h., die ringförmigen Vorsprünge der Kolbenteile ragen möglichst weit in den Ringspeicherraum 5 (Fig. 3 linke Darstellung). Die über die Fließkanalbohrungen 4.1 A, 4.1 B, 4.1 C und die Fließkanäle 4.A, 4.B, 4.C einströmenden Materialschmelzen A, B, C werden nun im Fließkanal 6 zunächst nacheinander zusammengeführt und strömen dann durch den sich allmählich trichterförmig erweiternden Fließkanal 6 in den Ringspeicherraum 5. Dabei wird der Ringkolben 4 entsprechend dem auszuspritzenden Volumen zurückgedrückt bzw. zurückbewegt (Fig.3, rechte Darstellung). In dem Ringspeicherraum 5 befinden sich nun drei ringförmige Schichten aus den unterschiedlichen Materialschmelzen A, B, C. Sobald der Ringkolben 4 seine vorgegebene Endlage gemäß der rechten Darstellung der Fig. 3 eingenommen hat, wird der Kolben 7 mit Druckmittel beaufschlagt. Dadurch bewegt sich der Ringkolben 4 aus der rechten Darstellung wieder in die linke Darstellung der Fig.3, und die im Ringspeicherraum 5 befindlichen Materialschmelzen A, B, C werden durch den Ringkolben 4 über den inzwischen geöffneten Düsenspalt 11 als Extrudat 12 ausgestoßen. Dieses Extrudat 12 bildet einen mehrschichtigen, schlauchartigen Vorformling, der aus drei unterschiedlichen Schichten entsprechend den unterschiedlichen Materialschmelzen A, B, C besteht. Es hat sich gezeigt, daß ein Zerstören dieser Schichten oder eine Veränderung der Schichtdicken während des Ausstoßvorganges nicht auftritt. Die einzelnen Schichten verhalten sich genau proportional zu den Querschnittsveränderungen während des Fließvorganges, sowohl beim Fördervorgang als auch beim Ausstoßen.

In Abänderung des erläuterten Ausführungsbeispieles ist es möglich, die Ringkolben 4 starr mit den Extrudern 9, 10 zu verbinden. Die Extruder 9, 10 müssen jedoch dann verschiebbar gelagert sein. Femer ist es möglich, den Ringkolben 4 und die Extruder 9, 10 starr mit dem Maschinengestell zu verbinden. Dann müssen jedoch der Speichermantel 1 und die Pinole 2 mit dem Düsenpilz 3 die Vertikalbewegung ausführen.

## Patentansprüche

1. Verfahren
a) zur diskontinuierlichen Herstellung mehrschichtiger, coextrudierter, schlauchartiger Vorformlinge aus thermoplastischem Kunststoff
b) zur Bildung großvolumiger, mehrschichtiger Hohlkörper in einer geteilten Blasform,
c) bei dem mindestens zwei unterschiedliche, ringförmige Materialschmelzen (A, B, C) zu einer mehrschichtigen Materialschmelze zusammengeführt werden
d) die mehrschichtige Materialschmelze sich trichterförmig erweiternd in einen Ringspeicherraum (5) fließt
e) und anschließend durch einen in axialer Richtung bewegbaren Ringkolben (4),
f) der als Coextrusionskopf wirkt und von der mehrschichtigen Materialschmelze nach oben gedrückt wird,
g) über einen Ringdüsenspalt (11) ausgestoßen wird,
h) wobei die einzelnen Materialschmelzen mittig in bezug auf die Breite des Ringspeicherraums (5) nacheinander und in Extrusionsrichtung zu der mehrschichtigen Materialschmelze innerhalb des Ringkolbens (4) zusammengeführt werden, und
i) wobei die trichterförmige Erweiterung im Ringkolben (4) im Längsschnitt durch den Ringkolben (4) eine V-Form hat, deren Schenkel vom Ort der Zusammenführung der mehrschichtigen Materialschmelze ausgehen und im wesentlichen bis zu den in Richtung der Düse (11) ragenden Enden des Ringkolbens (4) und im wesentlichen bis zur jeweiligen Mantelfläche des Ringkolbens (4) verlaufen.

2. Vorrichtung
a) zur diskontinuierlichen Herstellung mehrschichtiger, coextrudierter, schlauchartiger Vorformlinge aus thermoplastischem Kunststoff,
b) zur Bildung großvolumiger, mehrschichtiger Hohlkörper in einer geteilten Blasform,
c) bestehend aus einem Coextrusionskopf mit mehreren koaxial angeordneten ringförmigen Fließkanälen (4.A, 4.B, 4.C),
d) die über getrennte Fließkanalbohrungen (4.1.A, 4.1.B, 4.1.C) mit Extrudern (9, 10) für die unterschiedlichen Materialschmelzen verbunden sind,
e) und in einen gemeinsamen, sich trichterförmig erweiternden Fließkanal übergehen,
f) aus einem einen verschiebbaren Ringkolben (4) aufnehmenden Ringspeicherraum sowie aus einem sich an den Ringspeicherraum (5) anschließenden Ringkanal mit einem absperrbaren Düsenspalt (11),
g) wobei der Ringkolben (4) für jede einzelne Materialschicht (A, B, C) einen schrägen, in Extrusionsrichtung weisenden, ringförmigen Fließkanal (4.A, 4.B, 4.C) aufweist,
h) wobei die Fließkanäle (4.A, 4.B, 4.C) mittig in bezug auf die Breite des Ringspeicherraums zulaufen und in einer Ebene quer zur Längsachse des Ringkolbens gesehen konzentrisch und in Richtung der Düse (11) hintereinander im Ringkolben (4) angeordnet sind
i) und ebenfalls im Ringkolben (4) in den gemeinsamen Fließkanal (6) übergehen, und
j) wobei die trichterförmige Erweiterung im Ringkolben (4) im Längsschnitt durch den Ringkolben (4) eine V-Form hat, deren Schenkel vom Ort der Zusammenführung der mehrschichtigen Materialschmelze ausgehen und im wesentlichen bis zu den in Richtung der Düse ragenden Enden des Ringkolbens (4) und im wesentlichen bis zur jeweiligen Mantelfläche des Ringkolbens (4) verlaufen.

3. Vorrichtung nach Anspruch 2, **dadurch gekennzeichnet, daß** der Ringkolben (4) aus mindestens drei ringförmigen Kolbenteilen besteht, zwischen denen die ringförmigen Fließkanäle (4.A, 4.B, 4.C) in bezug auf die Breite des Ringkolbens (4) mittig zulaufen und konzentrisch ausgebildet sind.

4. Vorrichtung nach Anspruch 3 **dadurch gekennzeichnet, daß** das innere und das äußere ringförmige Kolbenteil je einen umlaufenden, sich in axialer Richtung erstreckenden Vorsprung mit keilförmigem Querschnitt besitzt.

5. Vorrichtung nach mindestens einem der Ansprüche 2 bis 4, **dadurch gekennzeichnet, daß** die Extruder (9, 10) über gelenkartige Anschlüsse (9.2, 10.2) mit dem Ringkolben (4) verbunden und nahe ihres Antriebes (9.3, 10.3) auf einer in Längsrichtung der Extruder (9, 10) verschiebbaren Drehachse (9.1, 10.1) gelagert sind.

6. Vorrichtung nach mindestens einem der Ansprüche 2 bis 4, **dadurch gekennzeichnet, daß** die Extruder (9, 10) fest mit dem Ringkolben (4) verbunden und mit dem Ringkolben (4) verschiebbar angeordnet sind.

7. Vorrichtung nach mindestens einem der Ansprüche 2 bis 4, **dadurch gekennzeichnet, daß** der Ringkolben (4) und die Extruder (9, 10) ortsfest angeordnet und der Mantel (1) und die Pinole (2) des Ringspeichers (5) verschiebbar ausgebildet sind.

## Claims

1. Method
a) for the discontinuous production of multilayer, coextruded, tubular parisons from thermoplastic material
b) for the formation of large-volume, multilayer hollow articles in a divided blow mould,
c) where at least two different, annular material melts (A, B, C) are brought together to form a multilayer material melt
d) the multilayer material melt flowing in funnel-shaped expanding manner into an annular reservoir (5)
e) and then through an axially movable annular piston (4),
f) which acts as a coextrusion die head and is pushed upwards by the multilayer material melt,
g) is expelled through a ring-shaped die slot (11),
h) wherein the individual material melts are brought together centrally in relation to the width of the annular reservoir (5) one after the other and in the direction of extrusion within the annular piston (4) to form a multilayer material melt, and
i) wherein the funnel-shaped expansion in the annular piston (4), in the longitudinal section through the annular piston (4), has a V-shaped form whose arms run from the point where the multilayer material melts merge and essentially to the ends of the annular piston (4) projecting in the direction of the die slot (11) and essentially to the respective surface area of the annular piston (4).

2. Apparatus
a) for the discontinuous production of multilayer, coextruded, tubular parisons from thermoplastic material,
b) for the formation of large-volume, multilayer hollow articles in a divided blow mould,
c) comprising of a coextrusion head with a plurality of coaxially arranged annular flow channels (4.A,, 4.B, 4.C),
d) which are connected via separate flow channel bores (4.1.A, 4.1.B, 4.1.C) to extruders (9, 10) for the different material melts,
e) and merge into a common flow channel widening in the form of a funnel,
f) having an annular reservoir chamber (5) receiving a displaceable annular piston (4) and, following the annular reservoir chamber (5), an annular channel with a die slot (11) which can be closed,
g) wherein for each individual material layer (A, B, C) the annular piston (4) exhibits one inclined annular flow channel (4.A, 4.B, 4.C) which points in the direction of extrusion,
h) wherein the flow channels (4.A, 4.B, 4.C) run centrally in relation to the width of the annular reservoir chamber (5) and, seen in a plane transverse to the longitudinal axis of the annular piston, are arranged concentrically in the annular piston (4) and one after the other in the direction of the die slot (11),
i) and likewise merging in the annular piston (4) into the common flow channel (6), and
j) wherein funnel-shaped expansion in the annular piston (4) in the longitudinal section through the annular piston (4) is V-shaped, whose arms run from the point where the multilayer material melts merge and essentially to the ends of the annular piston (4) projecting in the direction of the die slot and essentially run to the respective surface area of the annular piston (4).

3. Apparatus according to claim 2, **characterised in that** the annular piston (4) comprises at least three annular piston parts, between which the annular flow channels (4.A, 4.B, 4.C) run centrally in relation to the width of the annular piston (4) and are concentrically formed.

4. Apparatus according to claim 3, **characterised in that** the inner and outer annular piston part in each case has a circumferential projection, extending in the axial direction, with wedge-shaped cross-section.

5. Apparatus according to at least one of the claims 2 to 4, **characterised in that** the extruders (9, 10) through articulated connections (9.2, 10.2) are connected to the annular piston (4) and are mounted in the proximity of their drive (9.3, 10.3) on a rotary axis (9.1, 10.1) for displacement in the longitudinal direction of the extruders (9, 10).

6. Apparatus according to at least one of the claims 2 to 4, **characterised in that** the extruders (9, 10) are firmly connected to the annular piston (4) and arranged for displacement with the annular piston (4).

7. Apparatus according to at least one of the claims 2 to 4, **characterised in that** the annular piston (4) and the extruders (9, 10) are arranged in a stationary manner and the jacket (1) and the centre (2) of the annular reservoir (5) are constructed to be displaceable.

## Revendications

1. Procédé
a) pour la fabrication discontinue de paraisons tubulaires en matière thermoplastique à plusieurs couches coextrudées,
b) pour la formation d'objets creux à plusieurs couches et à grand volume dans un moule de soufflage partagé,
c) procédé dans lequel sont réunies au moins deux matières fondues annulaires différentes (A, B, C) pour .former une matière fondue à plusieurs couches,
d) la matière fondue à plusieurs couches s'écoule dans une cavité accumulatrice annulaire (5) tout en s'évasant,
e) et ensuite est pressé vers le haut par un piston annulaire (4) et mobile en direction axiale,
f) qui fonctionne en tant que tête de coextrusion et est pressé vers le haut par la matière fondue à plusieurs couches,
g) et est extrudée à travers une fente de buse annulaire (11),
h) procédé dans lequel les matières fondues individuelles (A, B, C) sont réunies au centre par rapport à la largeur de la cavité accumulatrice annulaire (5), l'une après l'autre et dans la direction d'extrusion, pour former la matière fondue à plusieurs couches à l'intérieur du piston annulaire (4), et
i) procédé dans lequel l'élargissement en forme d'entonnoir dans le piston annulaire (4) possède, en coupe longitudinale à travers le piston annulaire (4), la forme d'un V, dont les branches partent du lieu de réunion de la matière fondue à plusieurs couches et s'étendent sensiblement jusqu'aux extrémités du piston annulaire (4), qui s'avancent en direction de la buse (11), et sensiblement jusqu'à. la paroi respective du piston annulaire (4).

2. Appareillage
a) pour la fabrication discontinue de paraisons tubulaires en matière thermoplastique à plusieurs couches coextrudées,
b) pour la formation d'objets creux à plusieurs couches et à grand volume dans un moule de soufflage partagé,
c) comprenant une tête de coextrusion contenant plusieurs canaux d'écoulement annulaires (4.A, 4.B, 4.C) arrangés coaxialement,
d) qui sont reliés par l'intermédiaire de passages d'écoulement séparées (4.1 A, 4.1 B, 4.1 C) aux dispositifs d'extrusion (9, 10) pour les différentes matières fondues,
e) et qui se transforment en un canal d'écoulement commun qui s'élargit en forme d'entonnoir,
f) comprenant une cavité accumulatrice annulaire contenant un piston annulaire et coulissant (4), ainsi qu'un canal annulaire, qui est abouté à la cavité accumulatrice annnulaire (5) et est muni d'une fente de buse (11) qui peut être fermée,
g) dans lequel appareillage le piston annulaire (4) possède pour chaque couche de matière (A, B, C) un canal d'écoulement annulaire (4.A, 4.B, 4.C) incliné dans la direction d'extrusion,
h) les canaux d'écoulement (4.A, 4.B, 4.C) se rejoignant au milieu par rapport à la largeur de la cavité accumulatrice annulaire et étant arrangés concentriquement, par référence à un plan transversal à l'axe longitudinal du piston annulaire, et les uns après les autres en direction de la buse (11) dans le piston annulaire (4),
i) et se transformant également à l'intérieur du piston annulaire (4) en canal d'écoulement commun (6),
j) dans lequel appareillage l'élargissement en forme d'entonnoir dans le piston annulaire (4) possède, en coupe longitudinale à travers le piston annulaire (4), la forme d'un V, dont les branches partent du lieu de réunion de la matière fondue à plusieurs couches et s'étendent sensiblement jusqu'aux extrémités du piston annulaire (4), qui s'avancent en direction de la buse, et sensiblement jusqu'à la paroi respective du piston annulaire (4).

3. Appareillage selon la revendication 2, **caractérisé en ce que** le piston annulaire (4) comprend au moins trois parties de piston annulaires, entre lesquelles les canaux d'écoulement annulaires (4.A, 4.B, 4.C) se rejoignent au milieu par rapport à la largeur du piston annulaire (4) et sont réalisés concentriquement.

4. Appareillage selon la revendication 3, **caractérisé en ce que** les parties de piston annulaire intérieure et extérieure possèdent chacune une saillie périphérique qui s'avance dans la direction axiale avec une section en forme de coin.

5. Appareillage selon au moins l'une des revendications 2 à 4, **caractérisé en ce que** les dispositifs d'extrusion (9, 10) sont reliés par l'intermédiaire de jonctions articulées (9.2, 10.2) au piston annulaire (4) et sont logés près de leur commande (9.3, 10.3) sur un pivot (9.1, 10.1) mobile dans le sens longitudinal des dispositifs d'extrusion (9, 10).

6. Appareillage selon au moins l'une des revendications 2 à 4, **caractérisé en ce que** les dispositifs d'extrusion (9, 10) sont fixés au piston annulaire (4) et sont arrangés de sorte qu'ils puissent être coulissés ensemble avec le piston annulaire (4).

7. Appareillage selon au moins l'une des revendications 2 à 4, **caractérisé en ce que** le piston annulaire (4) et les dispositifs d'extrusion (9, 10) sont arrangés de façon stationnaire et la paroi (1) et la broche (2) de la cavité accumulatrice annulaire (5) sont conçues de façon coulissante.
